# FASCICULE DE BREVET EUROPEEN

(11) **EP 1 705 735 B1**
(45) Date de publication et mention de la délivrance du brevet: **15.03.2017**
(21) Numéro de dépôt: 06290184.8
(22) Date de dépôt: 31.01.2006
(51) Int. Cl.: H01M 2/12, H01M 6/50

(54) **Accumulateur étanche muni d'un dispositif de sécurité**
Dicht verschlossener Akkumulator mit Sicherheitseinrichtung
Sealed storage battery with safety device

(30) Priorité: 01.02.2005 FR 0500982
(43) Date de publication de la demande: 27.09.2006
(73) Titulaire: SAFT, 93170 Bagnolet (FR)
(72) Inventeur: DEWULF, Frédéric, 86240 Smarves (FR); VIGIER, Nicolas, 86130 Jaunay-Clan (FR)
(74) Mandataire: Hirsch & Associés

(56) Documents cités:
- EP-A- 1 126 534
- US-B1- 6 248 470
- US-B1- 6 296 965
- US-B1- 6 403 250

## Description

La présente invention se rapporte à un accumulateur étanche muni d'un dispositif de sécurité coupe-circuit.

Un accumulateur étanche ou générateur électrochimique étanche (ces deux termes étant équivalents, on utilisera le terme d'accumulateur dans la présente description) comprend de façon connue en soi un faisceau électrochimique comportant une alternance d'électrodes positives et négatives encadrant des séparateurs imprégnés d'électrolyte. Chaque électrode est composée d'un collecteur de courant métallique supportant sur au moins une de ses faces la matière électrochimiquement active. L'électrode est connectée électriquement à une sortie de courant qui assure la continuité électrique entre l'électrode et l'application extérieure à laquelle l'accumulateur est associé. Le faisceau d'électrodes est disposé dans un conteneur fermé de manière étanche par un couvercle.

L'invention concerne les accumulateurs étanches de type nickel-cadmium, nickel-métal hydrure ou lithium-ion. Ces accumulateurs peuvent être de format cylindrique ou de format rectangulaire (connu également sous le terme de prismatique) ou semi-prismatique (de forme oblongue).

Un accumulateur est généralement conçu pour fonctionner dans des conditions dites nominales, c'est-à-dire dans des gammes de température, courant et tension données. L'utilisation d'un accumulateur étanche hors des conditions nominales, comme par exemple une surcharge accidentelle, un court-circuit, une température supérieure à la température maximale de fonctionnement, etc. crée un risque d'explosion. En effet, de telles situations entraînent un échauffement de l'électrolyte et la formation de vapeurs d'électrolyte. L'accumulation de ces vapeurs dans le conteneur entraîne une augmentation de la pression interne de l'accumulateur, qui peut conduire à un éclatement violent du conteneur et à la projection de composés chimiques nocifs et corrosifs pour l'environnement et les personnes situées à proximité.

Des dispositifs de sécurité existent, qui évitent l'accumulation des gaz à l'intérieur du conteneur d'un accumulateur étanche et permettent leur évacuation lorsque la pression interne excède une valeur prédéterminée.

Les dispositifs de sécurité connus sont généralement constitués de soupapes. Le document US-A-5 523 178 décrit une soupape pour accumulateur. Cette soupape présente cependant l'inconvénient d'être de conception complexe. Lorsque leur conception est simple, les soupapes ont le désavantage de ne s'ouvrir que pour des pressions élevées ou de ne s'ouvrir que pour une plage étroite de pressions.

Par ailleurs, il est nécessaire qu'un dispositif de sécurité pour accumulateur possède également la fonction de coupe-circuit, apte à interrompre rapidement la réaction de surcharge en interrompant le circuit électrique dans l'accumulateur. La fonction coupe-circuit permet aussi d'isoler électriquement et de façon irréversible les appareils connectés à l'accumulateur.

Le document US-A-6 274 264 décrit un dispositif de sécurité pour accumulateur comprenant d'une part un coupe circuit destiné à interrompre le chemin électrique entre une électrode interne reliée au faisceau électrochimique et une borne de sortie de courant lorsque la pression dans l'accumulateur dépasse un seuil prédéterminé ; et d'autre part une soupape constituée d'une portion de couvercle présentant des amincissements adaptée à se déchirer lorsque la pression dans l'accumulateur dépasse un autre seuil prédéterminé supérieur au premier.

Par ailleurs, on connaît du document US-A-6 392 172 un dispositif de sécurité pour accumulateur comprenant un coupe circuit intégré dans une paroi latérale du conteneur et adapté à interrompre le chemin électrique entre une électrode interne reliée au faisceau électrochimique et une borne de sortie de courant lorsque la pression dans l'accumulateur dépasse un seuil prédéterminé.

Le document FR-A-2 756 421 décrit une borne coupe-circuit traversant le couvercle du conteneur d'un accumulateur. Le coupe-circuit comprend une pièce de rupture circulaire présentant des fragilisations sur sa périphérie et soudée en son centre à une membrane. En fonctionnement normal, la membrane avec la pièce de rupture assure la continuité électrique entre l'électrode interne et la borne de sortie de courant. En cas de dysfonctionnement et d'augmentation de la pression interne au conteneur de l'accumulateur, la membrane se déforme brusquement en entraînant avec elle le centre de la pièce de rupture qui se brise sur sa périphérie entre ses points de fragilisation. La continuité électrique est ainsi interrompue mais l'étanchéité préservée par la membrane.

Le document US6,248,470 décrit un accumulateur étanche muni d'un coupe circuit comprenant une pièce de liaison et une membrane adaptée à se déformer sous l'effet d'une surpression, la déformation de la membrane étant adaptée à rompre la pièce de liaison.

Les dispositifs coupe-circuit connus limitent le passage du courant délivré par l'accumulateur à environ 20A du fait d'une résistance interne élevée, de l'ordre de 0,5 à 2mΩ. En effet, les coupe-circuits de l'art antérieur sont dimensionnés pour rompre ou se déformer à une valeur de pression limite, de l'ordre de 7 à 10 bars, afin de remplir leur fonction de coupe-circuit et interrompre le chemin électrique. Ils ne doivent donc pas être trop épais. En contre partie, ils ne peuvent pas conduire un courant élevé, par exemple de l'ordre de 50A, pour des applications à des éléments de forte puissance.

Il existe donc un besoin d'un accumulateur étanche muni d'un dispositif de sécurité coupe-circuit de conception simple et qui applicable à des courants élevés pour des appareils de fortes puissances.

A cet effet, l'invention propose un accumulateur étanche selon la revendication 1, comprenant :
- un faisceau électrochimique comprenant au moins une électrode positive et une électrode négative disposé dans un conteneur ;
- des bornes de sortie de courant positive et négative disposées sur un couvercle du conteneur et respectivement reliées aux électrodes positive et négative ;
- un coupe-circuit comprenant :
   ∘ une pièce de liaison s'étendant sur le dessus du couvercle du conteneur et adapté à conduire un courant électrique compris entre 30A et 100A entre une électrode d'une polarité et sa borne de sortie de courant ; et
   ∘ une membrane électriquement isolée de la pièce de liaison et adaptée à se déformer sous l'effet d'une surpression dans le conteneur, la déformation de la membrane étant adaptée à rompre la pièce de liaison.

Selon les modes de réalisation, l'accumulateur selon l'invention présente une ou plusieurs de caractéristiques suivantes :
- la pièce de liaison présente au moins une fragilisation ;
- la fragilisation de la pièce de liaison est située à proximité de son point de connexion avec la borne de sortie de courant ;
- la pièce de liaison présente une section de passage du courant, largeur par épaisseur, comprise entre 2 mm² et 3 mm² ;
- la pièce de liaison s'étend entre une borne intermédiaire reliée à une électrode du faisceau électrochimique et la borne de sortie de courant ;
- la pièce de liaison présente deux fragilisations, une première fragilisation étant conformée pour assurer la rupture de la pièce de liaison et une seconde fragilisation étant conformée pour assurer un basculement de la pièce de liaison rompue ;
- la première fragilisation de la pièce de liaison comprend deux affaiblissements symétriques en V situés respectivement sur chaque face de la pièce de liaison ;
- la première fragilisation de la pièce de liaison comprend deux pattes encadrant une ouverture percée dans la pièce, deux affaiblissements s'étendant respectivement sur chaque patte selon deux directions sensiblement perpendiculaires ;
- la pièce de liaison est en aluminium ;
- la membrane est en aluminium ;
- la membrane présente une épaisseur comprise entre 100 et 150 µm ;
- la membrane présente une forme convexe vers l'intérieur du conteneur avant fonctionnement du coupe-circuit ;
- la membrane présente une déformation centrale concave ;
- la membrane est adaptée à se déformer avec une amplitude supérieure ou égale à 1,5 mm ;
- une couche isolante est prévue entre la membrane et la pièce de liaison, la couche isolante restant intègre lorsque la pièce de liaison est rompue par déformation de la membrane ;
- la membrane est située dans l'épaisseur du couvercle ;
- un capot de protection recouvre le coupe-circuit ;
- la pièce de liaison est adaptée à conduire un courant électrique entre l'électrode négative et la borne de sortie de courant négative ou entre l'électrode positive et la borne de sortie de courant positive ;
- l'accumulateur est de format cylindrique ou de format prismatique ;
- la membrane est adaptée à se déformer lorsque la pression à l'intérieur du conteneur est supérieure à 3 bars ;
- la pièce de liaison est adaptée à rompre sous l'effort de poussée de la membrane lorsque la pression à l'intérieur du conteneur est comprise entre 5 bars et 9 bars ;
- l'accumulateur reste étanche après rupture de la pièce de liaison, lorsque la pression à l'intérieur du conteneur est comprise entre 5 bars et 9 bars ;
- l'accumulateur comprend un opercule de sécurité se déchirant sous l'effet d'une surpression dans le conteneur comprise entre 12 et 16 bars.

D'autres caractéristiques et avantages de l'invention apparaîtront à la lecture de la description qui suit, donnée à titre d'exemple et en référence aux figures qui montrent :
- Figure 1, une vue en coupe longitudinale d'un accumulateur prismatique lithium-ion étanche, muni d'un dispositif de sécurité selon l'invention ;
- Figures 2A et 2B, respectivement une vue schématique en perspective latérale du dispositif de sécurité selon l'invention, respectivement dans un état avant rupture et un état après rupture ;
- Figure 3, une vue schématique en coupe d'un mode de réalisation d'une fragilisation de la pièce de rupture du dispositif de sécurité selon l'invention ;
- Figure 4, une vue schématique en perspective d'un autre mode de réalisation d'une fragilisation de la pièce de rupture du dispositif de sécurité selon l'invention ;
- Figure 5, un graphe illustrant du fonctionnement du dispositif coupe-circuit selon l'invention.

L'accumulateur étanche selon l'invention comprend un faisceau électrochimique comprenant au moins une électrode positive et une électrode négative disposé dans un conteneur ; et des bornes de sortie de courant positive et négative disposées sur un couvercle du conteneur et respectivement reliées aux électrodes positive et négative. L'accumulateur comprend aussi un coupe-circuit comprenant une pièce de liaison et une membrane électriquement isolée de la pièce de liaison et adaptée à se déformer sous l'effet d'une surpression dans le conteneur. La pièce de liaison s'étend sur le dessus du couvercle du conteneur et elle est adaptée à conduire un courant électrique entre une électrode d'une polarité et sa borne de sortie de courant. La déformation de la membrane permet de rompre la pièce de liaison.

Ainsi dans l'hypothèse où la pression interne de l'accumulateur dépasserait une valeur seuil prédéterminée, la déformation de la membrane permet de rompre la pièce de liaison qui assure le passage du courant, interrompant la conduction électrique entre les électrodes d'une polarité et sa borne de sortie de courant.

La pièce de liaison est dimensionnée pour permettre le passage d'un courant relativement élevé, de l'ordre de 30A à 50A et pouvant atteindre 100A, mais peut néanmoins se rompre sous l'effort de la membrane qui exerce une force concentrée au centre de la pièce.

L'invention va être décrite dans un mode préféré de réalisation donné à titre d'exemple.

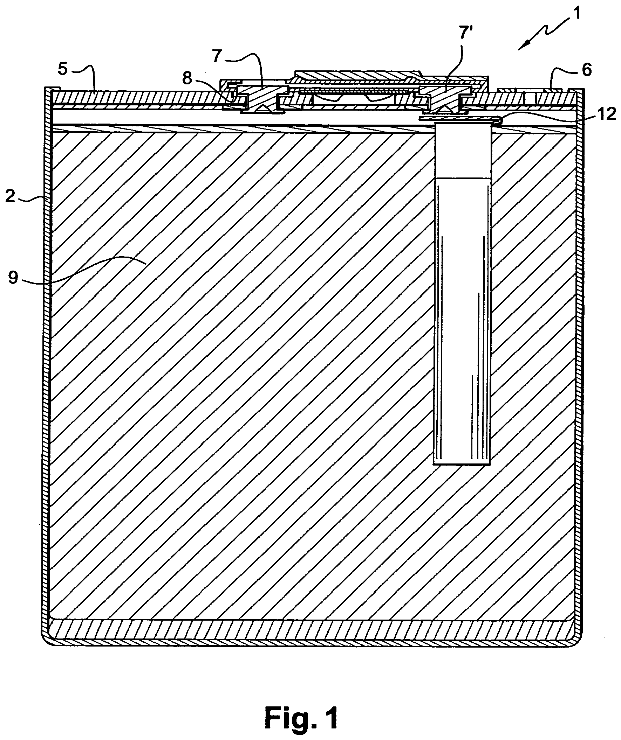

La figure 1 montre en coupe longitudinale un accumulateur lithium-ion prismatique étanche muni du dispositif de sécurité selon l'invention.

L'accumulateur 1 comprend un conteneur 2 avec un couvercle 5 qui supporte les bornes de sortie de courant 6 et 7. Une des bornes de sortie de courant est soudée sur le couvercle; et l'autre borne de sortie de courant passe à travers le couvercle. Dans l'exemple illustré, le conteneur 2 avec le couvercle 5 sont au pôle positif et c'est donc la borne positive 6 qui est soudée au couvercle 5. La borne négative 7 est fixée au couvercle 5 par un rivet vissé ou serti traversant l'épaisseur du couvercle. Un joint 8 isole électriquement la borne de sortie de courant négative 7 du couvercle.

Un faisceau électrochimique 9, constitué par un enroulement d'électrodes positives, négatives et de séparateurs, est disposé dans le conteneur autour d'un axe creux qui sert de cheminée de gaz. L'électrode positive est constituée d'un collecteur de courant, qui peut être un feuillard en aluminium, recouvert de matière active constituée d'un oxyde lithié de métaux de transition tel que LiCoO₂, LiNiO₂, LiMnO₂, LiMn₂O₄, ou un mélange de ceux-ci. L'électrode négative est constituée d'un collecteur de courant, qui peut être un feuillard en cuivre, recouvert de matière active constituée d'un matériau capable d'insérer réversiblement du lithium tel que le graphite, le coke, le carbone vitreux et le noir de carbone. Le séparateur peut être en polyoléfine. On superpose au moins une électrode positive, au moins un séparateur et au moins une électrode négative pour former le faisceau électrochimique 9 et on enroule le faisceau électrochimique autour de l'axe creux.

Une connexion plane raccorde l'électrode positive du faisceau à une paroi du conteneur, les parois du conteneur étant électriquement conductrices avec le couvercle qui est raccordé à la borne de sortie de courant positive 6. Une autre connexion plane 12 raccorde l'électrode négative du faisceau à une borne intermédiaire 7' reliée électriquement à la borne de sortie de courant négative 7. Un joint 8' isole électriquement la borne intermédiaire négative 7' du couvercle 5. Les électrodes positives et négatives peuvent être soudées à leur connexion plane. Une connexion de forme plane est préférable, mais tout autre type de connexion est peut-être envisageable.

Un joint est placé entre le faisceau électrochimique et le fond du conteneur. Il est constitué d'un matériau résistant à la chaleur, chimiquement stable et servant d'isolant électrique afin d'empêcher un contact électrique entre la tranche d'une électrode négative du faisceau et la paroi du conteneur reliée à la borne positive, ce qui pourrait occasionner un court-circuit.

Selon l'invention, un dispositif coupe-circuit est disposé entre l'électrode négative du faisceau électrochimique et la borne de sortie de courant négative 7. Plus spécifiquement, le dispositif coupe-circuit est disposé entre la borne intermédiaire 7' et la borne de sortie de courant négative 7. Un joint 8' isole électriquement la borne intermédiaire 7' du couvercle.

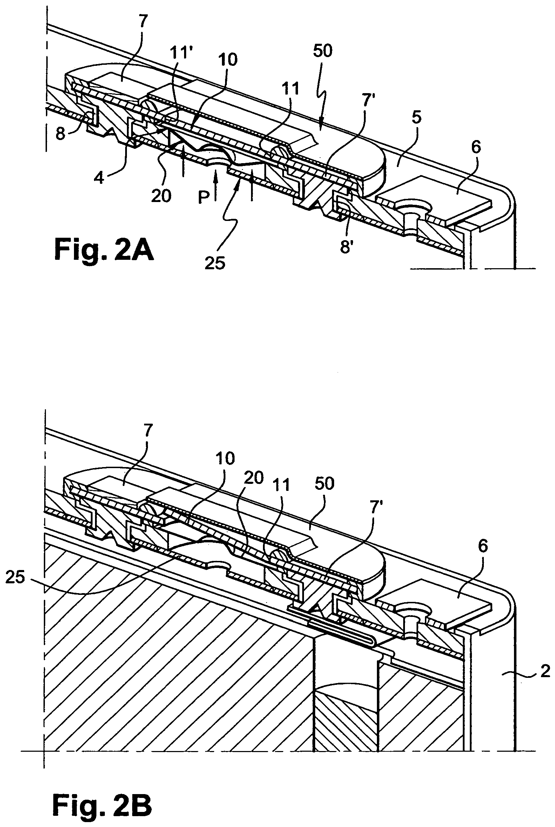

Les figures 2A et 2B illustrent en détail le dispositif coupe circuit.

Le coupe-circuit comprend une pièce de liaison 10 électriquement conductrice pour conduire un courant électrique entre l'électrode négative et la borne de sortie négative 7 et une membrane 20 adaptée à se déformer et à rompre la pièce de liaison 10 de façon à interrompre le passage du courant de manière irréversible. En particulier, la membrane 20 est adaptée à se déformer sous l'effet d'une surpression dans le conteneur 2, illustrée par les flèches P sur la figure 2A.

La pièce de liaison 10 présente une forme générale de plaque rectangulaire rigide d'une épaisseur d'environ 0,6 mm et d'une largeur de 3.3 mm avec une longueur dépendant de la distance entre la borne intermédiaire 7' et la borne de sortie de courant négative 7. La pièce de liaison 10 présente ainsi une section de 2mm² permettant le passage d'un courant relativement élevé, en particulier supérieur à 50A pour des applications à des appareils de forte puissance.

La pièce de liaison 10 peut être fixée à une de ses extrémités à la borne intermédiaire 7' traversant le couvercle 5 du conteneur pour relier l'électrode négative du faisceau électrochimique; et à son autre extrémité à la borne de sortie de courant négative 7. La pièce de liaison 10 s'étend donc à l'extérieur du conteneur 2, au-dessus du couvercle 5 supportant les bornes de sortie de courant 6, 7. Les extrémités de la pièce de liaison peuvent être fixées aux bornes 7, 7' par rivetage ou soudure laser. On évitera les risques de court-circuit entre la pièce de liaison 10 électriquement reliée à la borne négative 7 et le couvercle 5 électriquement relié à la borne positive 6 en fixant la pièce de liaison 10 sur le dessus des bornes 7, 7'. Une couche isolante 4 est par ailleurs prévue, qui sera décrite plus loin.

La pièce de liaison 10 est en aluminium. D'autre matériau conducteur peuvent être envisagés pour la pièce de liaison, comme le cuivre ou le nickel par exemple, mais l'aluminium est préféré pour des raisons de technologie d'assemblage par soudure laser avec les bornes en Cuivre, Cuivre nickelé ou Nickel. De plus, l'aluminium présente des caractéristiques mécaniques favorables à une rupture nette sous l'effet de poussée de la membrane 20, comme cela sera expliqué plus loin.

La pièce de liaison 10 présente au moins une fragilisation 11 qui permet à la pièce de liaison de se rompre sous l'effort de la membrane 20 déformée (figure 2B). Les caractéristiques du couple constitué par la pièce de liaison et la membrane sont choisies de manière à permettre la déformation de la membrane et la rupture de la pièce de liaison pour une plage de pression de 5 à 9 bar, la pression dans le conteneur en fonctionnement normal étant inférieure à 2 bars.

Sur le mode de réalisation illustré, la pièce de liaison 10 présente deux fragilisations 11, 11' situées à proximité borne de sortie de courant 7 et de la de la borne intermédiaire 7'. Une seule fragilisation pourrait cependant suffire, sur une des extrémité ou au centre de la pièce. Les fragilisations peuvent être constituées par des encoches dans l'épaisseur de la plaque de rupture 10 s'étendant de préférence sur toute la largeur de la plaque. Les encoches de fragilisation 11 doivent être suffisamment profondes pour garantir la rupture de la pièce de liaison 10 sans pour autant introduire une résistance interne trop importante qui empêcherait la conduction d'un courant élevé. A cet égard, on choisira une plaque présentant une section de 2 à 3 mm² pour réaliser la pièce de liaison avec une largeur bien supérieure à son épaisseur afin que la section conductrice de la plaque ne soit que peu modifiée par les encoches de fragilisation 11. La pièce de liaison 10 peut ainsi conduire un courant pouvant atteindre 100A, la limite haute étant fonction de la durée de l'impulsion électrique.

Le tableau ci-dessus montre un bilan des caractéristiques du couvercle comprenant un coupe-circuit selon l'invention. Ce tableau illustre bien que la pièce de liaison 10 est adaptée à conduire un courant relativement élevé sans que entraîner une trop forte élévation de température sur le couvercle 5.

| Action | Intensité traversant la pièce de liaison | Différence de température mesurée sur le couvercle |
|---|---|---|
| Appel de courant constant | 2A pendant 6h | < 10°C |
| | 4A pendant 3h | < 10°C |
| | 15A pendant 1h | < 15°C |
| Utilisation en puissance | 30A pendant 20min | < 20°C |
| | 50A pendant 6min | < 40°C |
| Pic de courant | 60A pendant 10sec / arrêt 20 sec ; 10 cycles | < 30°C |
| | 80A pendant 5sec / arrêt 20 sec ; 5 cycles | < 50°C |
| Vieillissement en cyclage | 50A pendant 5 min / arrêt 20 min ; 1000 cycles ; test paillasse à Tn | < 60°C |
| | 50A pendant 5 min / arrêt 20 min ; 500 cycles ; test adiabatique | < 80°C |

Une membrane 20 est par ailleurs placée sous la pièce de liaison 10. La membrane 20 n'a pas la même forme que la pièce de liaison, mais elle couvre toute la pièce de liaison, c'est-à-dire que sa surface est plus grande que celle de la plaque de la pièce de liaison. En particulier, la membrane peut avoir une forme sensiblement circulaire, ou toute autre forme appropriée, telle que rectangulaire par exemple, la plaque de la pièce de liaison s'étendant au dessus de la surface de la membrane.

La membrane 20 est conformée en dôme convexe vers l'intérieur du conteneur 2. La membrane 20 est ainsi bien éloignée de la pièce de liaison 10 en fonctionnement normal de l'accumulateur. La membrane 20 peut présenter une déformation centrale concave, c'est-à-dire tournée vers la pièce de liaison 10. Cette déformation centrale constitue une sorte de bouton poussoir contre la pièce de liaison 10 lorsque la membrane se retourne sous l'effet de la pression P à l'intérieur du conteneur 2. La forme et les dimensions du dôme de la membrane 20 sont telles que l'amplitude de déformation de la membrane est supérieure à 1.5 mm lorsqu'elle se retourne sous l'effet d'une surpression dans le conteneur 2 (passage de la figure 2A à la figure 2B).

La membrane 20 est positionnée à l'intérieur du conteneur 2, c'est-à-dire sous le couvercle 5, afin de pouvoir subir la pression des gaz provoquée par un dysfonctionnement de l'accumulateur. La membrane 20 peut être constituée par un amincissement localisé du couvercle 5 ou par une feuille rapportée sur une ouverture prévue dans le couvercle 5. Selon le mode de réalisation illustré, la membrane 20 est soudée sur la périphérie d'une ouverture ménagée dans le couvercle 5.

La membrane 20 est de préférence en aluminium et présente une très faible épaisseur, par exemple comprise entre 100 et 150µm, de préférence 125µm à l'état d'aluminium recuit. On peut réaliser une membrane aussi fine puisqu'elle n'est pas destinée à conduire un courant électrique comme c'est le cas dans la borne coupe-circuit du document FR-A-2 756 421. La forme de la membrane 20 permet néanmoins, malgré sa faible épaisseur, d'exercer une force d'environ 20N sur la pièce de liaison 10 lorsqu'elle se retourne.

On choisit de réaliser la membrane en aluminium pour des raisons de compatibilité de soudage avec le matériau du couvercle 5. En effet, le couvercle 5 est en aluminium lorsque le conteneur et le couvercle sont au pôle positif de l'accumulateur. De plus, la membrane doit être compatible avec l'électrolyte du conteneur et doit rester étanche. En effet, la membrane 20 est en contact avec l'intérieur du conteneur et est soumise aux vapeurs d'électrolyte lors du fonctionnement de l'accumulateur. Il ne faut pas que ces projections créent des dysfonctionnements électriques. Il est donc préférable que la membrane soit constituée du même matériau que le conteneur et le couvercle puisque, avant fonctionnement du dispositif coupe-circuit, elle est à la même polarité que le couvercle, c'est-à-dire au pôle positif. On peut prévoir une cale isolante 25 disposée sous la membrane 20 pour limiter les risques de court-circuit entre la connexion plane de polarité négative 12 et la membrane 20. Cette cale 25 présente une ouverture centrale permettant le passage des gaz émis par l'électrolyte et ainsi permettre le retournement de la membrane 20 en cas de surpression dans le conteneur.

Lors du fonctionnement du coupe-circuit, lorsque la membrane 20 pousse la pièce de liaison 10 à se rompre, il est nécessaire d'éviter tout risque de contact entre la pièce de liaison 10 électriquement reliée à la borne négative 7 et la membrane 20 retournée reliée au couvercle 5, c'est-à-dire électriquement relié à la borne positive 6. Une couche isolante 4 est donc prévue entre la membrane 20 et la pièce de liaison 10. Cette couche isolante 4 peut être une couche de revêtement, tel qu'un adhésif isolant déposé sur le côté de la membrane faisant face à la pièce de liaison, ou une couche de plastique souple interposée entre la membrane 20 et la plaque de liaison 10.

La nature de la couche isolante 4, en contact avec la pièce de liaison avant le fonctionnement du coupe-circuit, est choisie pouvoir supporter les élévations de températures résultant du passage du courant de forte intensité dans la pièce de liaison 10, en particulier un courant de l'ordre de 50A et pouvant atteindre 80A en régime pulsé de l'accumulateur. De plus, la couche isolante doit présenter des caractéristiques mécaniques suffisamment élastiques pour ne pas contenir la déformation de la membrane 20 et ne pas endiguer l'effort qu'elle exerce sur la pièce de liaison 10. La couche isolante 4 peut être en PVC (Poly Chlorure de Vinyle) et conserve ses caractéristiques isolantes sur une plage de température allant de -40 à +120°C. En particulier, la couche isolante 4 reste intègre après le fonctionnement du coupe-circuit, c'est-à-dire qu'elle n'est pas déchirée par le retournement de la membrane 20, afin de maintenir une isolation électrique entre la membrane 20 retournée et la pièce de liaison 10 rompue.

Afin d'éviter tout risque de détérioration du coupe-circuit, un capot de protection 50 peut recouvrir la pièce de liaison 10, et en particulier les fragilisations 11, 11' de la pièces de liaison. En effet, la pièce de liaison étant placée sur le dessus du couvercle, il y a un risque de défaillance ou de rupture prématurée de la pièce de liaison en cas de contact avec cette pièce.

Le fonctionnement du dispositif de sécurité est maintenant décrit.

En fonctionnement normal (figure 2A), l'accumulateur fourni un courant à un appareil par le bais de ses bornes de sortie positive 6 et négative 7. La pièce de liaison 10 est placée sur le chemin électrique entre l'électrode négative du faisceau électrochimique et la borne de sortie négative 7. La pièce de liaison 10 ne subit aucun effort particulier et permet le passage d'un fort courant.

En cas de surcharge de l'accumulateur, dû à un dépassement de charge ou pour tout autre dysfonctionnement électrique, des gaz sont produit par un échauffement de l'électrolyte et la pression dans le conteneur de l'accumulateur augmente. La surpression interne au conteneur exerce alors une force sur la membrane 20 (flèches de la figure 2A) qui entraîne son retournement (figure 2B). La membrane 20 était conçue pour se retourner lorsque la pression interne au conteneur dépasse 3 bars. Lorsque la pression dans le conteneur continue à augmenter, la membrane retournée se gonfle et le bouton de la membrane exerce une force sur la pièce de liaison 10. Lorsque la pression interne au conteneur atteint 7 bars ±2, la force exercée sur la pièce de liaison par la membrane entraîne la rupture de ladite pièce de liaison par fatigue de la pièce.

Le retournement de la membrane peut aussi être brutal lorsque la pression interne au conteneur atteint 7 bars ±2. La périphérie de la membrane 20 est fermement fixée, par soudage, au couvercle ; et la convexité de la membrane vers l'intérieur du conteneur peut être conçue pour se déformer d'un coup en concavité par rapport à l'intérieur du conteneur. Cette déformation brutale entraîne le bouton de la membrane 20 à exercer une forte pression ponctuelle sur la pièce de liaison. Cette force peut atteindre 20N. Au moins une des fragilisations 11, 11' de la pièce de liaison est choisie pour rompre sous l'effet d'une telle force. La pièce de liaison 10 se casse donc de manière irréversible et interrompt par là même la conduction du courant vers la borne de sortie négative de l'accumulateur. L'appareil auquel est relié l'accumulateur est alors isolé électriquement de l'accumulateur et les réactions l'électrolyse dans le conteneur sont immédiatement stoppé en l'absence de déplacement de charge.

La pièce de liaison 10, lorsqu'elle rompt, est isolée du couvercle 5 par la couche isolante 4 la séparant de la membrane 20. On cherche à garantir un isolement de la pièce de liaison 10 par rapport au couvercle 5, après fonctionnement du dispositif, de plus de 100MΩ sous 50V.

La poussée de la membrane 20 contre la pièce de liaison rompue 10 permet de bien éloigner l'extrémité rompue de la pièce de liaison de son point de connexion électrique avec l'une ou l'autre des bornes 7, 7'. Ainsi, l'extrémité rompue de la pièce de liaison présente un déplacement d'au moins 1 mm par rapport à son point de fixation sur une borne négative 7, 7' afin d'éviter l'apparition d'un arc électrique entre la borne et l'extrémité rompue. A cet égard, on préférera une ou des fragilisations située(s) à proximité des bornes plutôt qu'une fragilisation centrale qui entraînera une rupture de la pièce de liaison avec un écartement moindre entre les extrémité rompues.

Selon un mode de mise en oeuvre, les deux fragilisations 11, 11' de la pièce de liaison 10 ne sont pas identiques. Une première fragilisation 11 peut être conformée pour assurer la rupture de la pièce de liaison et une seconde fragilisation 11' peut être conformée pour assurer le basculement de la pièce de liaison rompue sous la poussée de la membrane 20. Le positionnement relatif de la pièce de liaison 10 et de la membrane 20 peut ainsi être ajusté pour assurer une bonne transmission de l'effort de la membrane 20 pour rompre la pièce et un déplacement suffisant de l'extrémité rompue de la pièce de liaison.

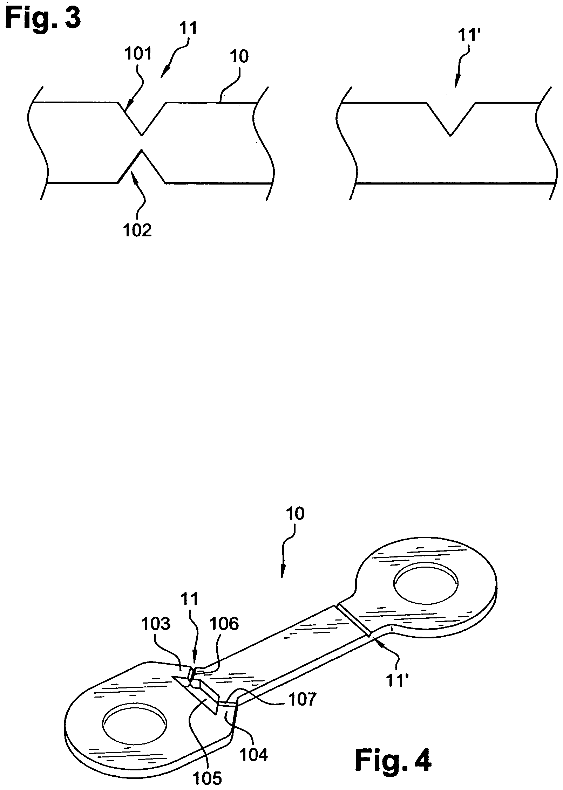

Selon le mode de réalisation illustré sur la figure 3, une première fragilisation de rupture 11 comprend deux affaiblissements symétriques en V 101, 102 situés de part et d'autre sur chaque face de la pièce de liaison 10. La seconde fragilisation 11' présentera alors une simple encoche permettant le pivotement de la pièce de liaison pour faciliter l'éloignement entre l'extrémité rompue de la pièce de liaison et la borne de fixation.

Selon le mode de réalisation illustré sur la figure 4, une première fragilisation de rupture 11 comprend deux pattes 103, 104 encadrant une ouverture 105 percée dans la pièce 10. Deux affaiblissements 106, 107 s'étendent sur chaque patte et forment un angle sensiblement égal à 90°. Les affaiblissements de chaque patte 103, 104 peuvent présenter deux encoches en V comme illustré sur la figure 3.

Les fragilisations de rupture 11 décrites en référence aux figures 3 et 4 permettent un bon compromis entre une section de la pièce 10 permettant le passage d'un fort courant et une section suffisamment petite pour garantir la rupture de la pièce aux plages de pression souhaitées.

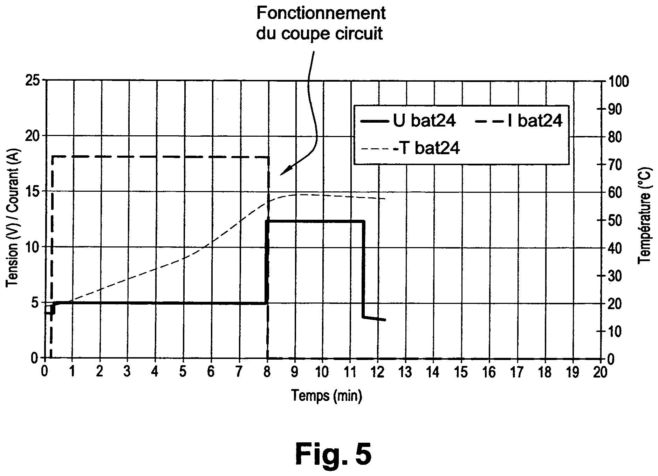

Le graphe de la figure 5 montre le fonctionnement d'un accumulateur selon l'invention, du type conteneur en aluminium délivrant une capacité de 6Ah.

A l'origine du graphe, l'accumulateur est en pleine charge, à 4,1V. L'accumulateur est alors surchargé sous une tension de 12V avec un courant d'alimentation de 18A.

Un courant de 18A (trait fin) circule sur la pièce de liaison 10 et l'accumulateur délivre une tension de surcharge (trait gras) de 5V environ. La température (trait pointillé) du boîtier augmente progressivement de 20°C à 60°C environ.

Au bout de 8min de surcharge environ, le coupe-circuit fonctionne, la pression des gaz à l'intérieur du conteneur ayant dépassé le seuil de 7bars ±2. Le courant (trait fin) chute brutalement. En effet, le passage du courant est immédiatement et irréversiblement interrompu par la rupture de la pièce de liaison 10. La température (trait pointillé) se stabilise et la tension (trait gras) présente un pic de surtension du au court-circuit avant de chuter en deçà de la tension de charge de l'accumulateur.

Le graphe de la figure 5 montre bien la coupure nette et irréversible provoquée par le coupe-circuit selon l'invention et montre que l'augmentation de la température est maîtrisée avant le seuil de fonctionnement du coupe-circuit.

L'accumulateur muni du coupe-circuit selon l'invention présente de nombreux avantages.

Le dispositif de sécurité selon l'invention présente l'avantage de ne pas réduire la densité de courant circulant entre le faisceau électrochimique et la borne de sortie de courant. En effet, l'épaisseur des fragilisations de la pièce de liaison est un compromis entre une section la plus grande possible pour assurer le passage du courant et une section suffisamment petite pour permettre la rupture de la pièce. La résistance interne de la pièce de liaison 10 est inférieure à 300µΩ et cette valeur peut être garantie pour toute la durée de vie de l'accumulateur, soit plus de 1000 cycles.

Le dispositif de sécurité est donc bien adapté aux applications de haute puissance, tels que des véhicules hybrides, des outillages portables ou des bases de secours de réseau de télécommunication par exemple, dans lesquelles de fortes densités de courants sont mises en oeuvre.

Un autre avantage de l'invention réside dans le fait que le faisceau électrochimique est retenu dans le conteneur en cas de rupture brutale du dispositif de sécurité car la membrane 20 empêche l'éjection du faisceau électrochimique et l'écoulement de l'électrolyte. Les risques de projections de produits chimiques dangereux sont ainsi limités.

Le dispositif de sécurité coupe-circuit selon l'invention est conçu pour fonctionner sur une plage de pression de 5 à 9 bars, alors qu'un opercule de sécurité fonctionne classiquement dans une plage de pression supérieure, entre 12 et 16 bars, et les soudures du conteneur sont conçues pour tenir à une pression de 20 bars environ. Or, lorsque le coupe-circuit selon l'invention est activé, c'est-à-dire lorsque la pièce de liaison a été rompue, la génération de vapeurs d'électrolyte cesse rapidement et la première limite des 12 bars ne peut donc être atteinte. L'étanchéité de l'accumulateur selon l'invention est donc garantie sans risque d'explosion du conteneur. L'accumulateur comporte néanmoins un opercule de sécurité actionné en cas de dysfonctionnement excessif. L'opercule de sécurité peut être de tout type connu en soi et peut être une pièce rapportée ou intégrée au couvercle ou au conteneur.

Le dispositif de sécurité selon l'invention présente aussi l'avantage d'un encombrement réduit, s'intégrant dans l'épaisseur du couvercle du conteneur.

Le présent mode de réalisation et les figures doivent être considérées comme ayant été présentés à titre illustratif et non restrictif, et l'invention n'est pas censée être limitée aux détails fournis ici mais peut être modifiée en restant dans le cadre de la portée des revendications annexées.

En particulier, le dispositif coupe-circuit peut être placé sur le chemin électrique entre l'électrode positive et la borne de sortie de courant positive plutôt qu'entre l'électrode négative et la borne de sortie de courant négative, le conteneur étant alors au pôle négatif. De même, bien que les figures annexées fassent référence à un accumulateur prismatique, le dispositif de sécurité de l'invention est tout à fait adaptable sur un accumulateur cylindrique.

En outre, les valeurs numériques données en référence à la pièce de liaison 10 et/ou à la membrane 20 ne sont pas limitatives de la portée de l'invention. En effet, ces valeurs peuvent être modifiées pour être adaptées à des valeurs différentes de pressions ou de courants.

## Revendications

1. Accumulateur étanche (1) comprenant :
- un faisceau électrochimique (9) comprenant au moins une électrode positive et une électrode négative disposé dans un conteneur (2) ;
- des bornes de sortie de courant positive (6) et négative (7) disposées sur un couvercle (5) du conteneur et respectivement reliées aux électrodes positive et négative ;
- un coupe-circuit comprenant :
- une pièce de liaison (10) s'étendant sur le dessus du couvercle du conteneur et adapté à conduire un courant électrique compris entre 30A et 100A entre une électrode d'une polarité et sa borne de sortie de courant, la pièce de liaison (10) s'étendant entre une borne intermédiaire (7') reliée à une électrode du faisceau électrochimique et la borne de sortie de courant (7). ; et
- une membrane (20) électriquement isolée de la pièce de liaison et adaptée à se déformer sous l'effet d'une surpression dans le conteneur, la déformation de la membrane étant adaptée à rompre la pièce de liaison.

2. Accumulateur étanche selon la revendication 1, **caractérisé en ce que** la pièce de liaison (10) présente au moins une fragilisation (11).

3. Accumulateur étanche selon la revendication 2, **caractérisé en ce que** la fragilisation (11) de la pièce de liaison (10) est située à proximité de son point de connexion avec la borne de sortie de courant (7).

4. Accumulateur étanche selon l'une des revendications 1 à 3, **caractérisé en ce que** la pièce de liaison (10) présente une section de passage du courant, largeur par épaisseur, comprise entre 2mm² et 3mm².

5. Accumulateur étanche selon l'une des revendications 1 à 4, **caractérisé en ce que** la pièce de liaison (10) présente deux fragilisations (11, 11'), une première fragilisation (11) étant conformée pour assurer la rupture de la pièce de liaison et une seconde fragilisation (11') étant conformée pour assurer un basculement de la pièce de liaison rompue.

6. Accumulateur étanche selon la revendication 5, **caractérisé en ce que** la première fragilisation (11) de la pièce de liaison (10) comprend deux affaiblissements symétriques en V (101, 102) situés respectivement sur chaque face de la pièce de liaison.

7. Accumulateur étanche selon la revendication 5 ou 6, **caractérisé en ce que** la première fragilisation de la pièce de liaison (10) comprend deux pattes (103, 104) encadrant une ouverture (105) percée dans la pièce (10), deux affaiblissements (106, 107) s'étendant respectivement sur chaque patte selon deux directions sensiblement perpendiculaires.

8. Accumulateur étanche selon l'une des revendications 1 à 7, **caractérisé en ce que** la pièce de liaison (10) est en aluminium.

9. Accumulateur étanche selon l'une des revendications 1 à 8, **caractérisé en ce que** la membrane (20) est en aluminium.

10. Accumulateur étanche selon l'une des revendications 1 à 9, **caractérisé en ce que** la membrane (20) présente une épaisseur comprise entre 100 et 150 µm.

11. Accumulateur étanche selon l'une des revendications 1 à 10, **caractérisé en ce que** la membrane (20) présente une forme convexe vers l'intérieur du conteneur avant fonctionnement du coupe-circuit.

12. Accumulateur étanche selon la revendication 11, **caractérisé en ce que** la membrane (20) présente une déformation centrale concave.

13. Accumulateur étanche selon l'une des revendications 1 à 12, **caractérisé en ce que** la membrane (20) est adaptée à se déformer avec une amplitude supérieure ou égale à 1,5 mm.

14. Accumulateur étanche selon l'une des revendications 1 à 13, **caractérisé en ce qu'**une couche isolante (4) est prévue entre la membrane (20) et la pièce de liaison (10), la couche isolante restant intègre lorsque la pièce de liaison est rompue par déformation de la membrane.

15. Accumulateur étanche selon l'une des revendications 1 à 14, **caractérisé en ce que** la membrane (20) est située dans l'épaisseur du couvercle (5).

16. Accumulateur étanche selon l'une des revendications 1 à 15, **caractérisé en ce que** un capot de protection (50) recouvre le coupe-circuit.

17. Accumulateur étanche selon l'une quelconque des revendications 1 à 16, **caractérisé en ce que** la pièce de liaison est adaptée à conduire un courant électrique entre l'électrode négative et la borne de sortie de courant négative.

18. Accumulateur étanche selon l'une quelconque des revendications 1 à 16, **caractérisé en ce que** la pièce de liaison est adaptée à conduire un courant électrique entre l'électrode positive et la borne de sortie de courant positive.

19. Accumulateur étanche selon l'une quelconque des revendications 1 à 18, de format cylindrique.

20. Accumulateur étanche selon l'une quelconque des revendications 1 à 18, de format prismatique.

21. Accumulateur étanche selon l'une quelconque des revendications 1 à 20, **caractérisé en ce que** la membrane (20) est adaptée à se déformer lorsque la pression à l'intérieur du conteneur (2) est supérieure à 3 bars.

22. Accumulateur étanche selon l'une quelconque des revendications 1 à 21, **caractérisé en ce que** la pièce de liaison (10) est adaptée à rompre sous l'effort de poussée de la membrane lorsque la pression à l'intérieur du conteneur (2) est comprise entre 5 bars et 9 bars.

23. Accumulateur étanche selon l'une quelconque des revendications 1 à 22, **caractérisé en ce qu'**il reste étanche après rupture de la pièce de liaison (10), lorsque la pression à l'intérieur du conteneur (2) est comprise entre 5 bars et 9 bars.

24. Accumulateur étanche selon l'une quelconque des revendications 1 à 23, comprenant un opercule de sécurité se déchirant sous l'effet d'une surpression dans le conteneur comprise entre 12 et 16 bars.

## Patentansprüche

1. Dicht verschlossener Akkumulator (1), umfassend:
- ein elektrochemisches Bündel (9), das mindestens eine positive Elektrode und eine negative Elektrode aufweist, die in einem Behälter (2) angeordnet ist;
- eine positive (6) und eine negative (7) Stromausgangsklemme, die auf einem Deckel (5) des Behälters angeordnet sind und jeweils mit der negativen und positiven Elektrode verbunden sind;
- eine Sicherung, umfassend:
- ein Verbindungsstück (10), das sich auf der Unterseite des Deckels des Behälters erstreckt und geeignet ist, einen elektrischen Strom, der zwischen 30 A und 100 A beträgt, zwischen einer Elektrode einer Polarität und ihrer Stromausgangsklemme zu leiten, wobei sich das Verbindungsstück (10) zwischen einer Zwischenklemme (7'), die mit einer Elektrode des elektrochemischen Bündels verbunden ist, und der Stromausgangsklemme (7) erstreckt; und
- eine Membran (20), die von dem Verbindungsstück elektrisch isoliert ist und geeignet ist, sich unter der Wirkung eines Überdrucks in dem Behälter zu verformen, wobei die Verformung der Membran geeignet ist, das Verbindungsstück zu brechen.

2. Abgedichteter Akkumulator nach Anspruch 1, **dadurch gekennzeichnet, dass** das Verbindungsstück (10) mindestens eine Bruchstelle (11) aufweist.

3. Abgedichteter Akkumulator nach Anspruch 2, **dadurch gekennzeichnet, dass** die Bruchstelle (11) des Verbindungsstücks (10) in der Nähe seiner Verbindungsstelle mit der Stromausgangsklemme (7) angeordnet ist.

4. Abgedichteter Akkumulator nach einem der Ansprüche 1 bis 3, **dadurch gekennzeichnet, dass** das Verbindungsstück (10) einen Stromdurchgangsquerschnitt, Breite mal Dicke, zwischen 2 mm² und 2 mm² aufweist.

5. Abgedichteter Akkumulator nach einem der Ansprüche 1 bis 4, **dadurch gekennzeichnet, dass** das Verbindungsstück (10) zwei Bruchstellen (11, 11`) aufweist, wobei eine erste Bruchstelle (11) ausgebildet ist, um das Brechen des Verbindungsstücks zu gewährleisten und die zweite Bruchstelle (11') ausgebildet ist, um ein Umkippen des gebrochenen Verbindungsstücks zu gewährleisten.

6. Abgedichteter Akkumulator nach Anspruch 5, **dadurch gekennzeichnet, dass** die erste Bruchstelle (11) des Verbindungsstücks (10) zwei V-förmige symmetrische Schwächungen (101, 102) aufweist, die jeweils auf jeder Seite des Verbindungsstücks angeordnet sind.

7. Abgedichteter Akkumulator nach Anspruch 5 oder 6, **dadurch gekennzeichnet, dass** die erste Bruchstelle des Verbindungsstücks (10) zwei Laschen (103, 104) aufweist, die eine Öffnung (105) einrahmen, die in das Stück (10) gebohrt ist, wobei sich zwei Schwächungen (106, 107) jeweils auf jeder Lasche in zwei im Wesentlichen senkrechten Richtungen erstrecken.

8. Abgedichteter Akkumulator nach einem der Ansprüche 1 bis 7, **dadurch gekennzeichnet, dass** das Verbindungsstück (10) aus Aluminium ist.

9. Abgedichteter Akkumulator nach einem der Ansprüche 1 bis 8, **dadurch gekennzeichnet, dass** die Membran (20) aus Aluminium ist.

10. Abgedichteter Akkumulator nach einem der Ansprüche 1 bis 9, **dadurch gekennzeichnet, dass** die Membran (20) eine Dicke aufweist, die zwischen 100 und 150 µm beträgt.

11. Abgedichteter Akkumulator nach einem der Ansprüche 1 bis 10, **dadurch gekennzeichnet, dass** die Membran (20), vor Betrieb der Sicherung, eine konvexe Form in Richtung des Inneren des Behälters aufweist.

12. Abgedichteter Akkumulator nach Anspruch 11, **dadurch gekennzeichnet, dass** die Membran (20) eine konkave mittlere Verformung aufweist.

13. Abgedichteter Akkumulator nach einem der Ansprüche 1 bis 12, **dadurch gekennzeichnet, dass** die Membran (20) geeignet ist, sich mit einer Amplitude zu verformen, die größer als oder gleich 1,5 mm ist.

14. Abgedichteter Akkumulator nach einem der Ansprüche 1 bis 13, **dadurch gekennzeichnet, dass** eine isolierende Schicht (4) zwischen der Membran (20) und dem Verbindungsstück (10) vorgesehen ist, wobei die isolierende Schicht unversehrt bleibt, wenn das Verbindungsstück durch die Verformung der Membran gebrochen wird.

15. Abgedichteter Akkumulator nach einem der Ansprüche 1 bis 14, **dadurch gekennzeichnet, dass** die Membran (20) in der Dicke des Deckels (5) angeordnet ist.

16. Abgedichteter Akkumulator nach einem der Ansprüche 1 bis 15, **dadurch gekennzeichnet, dass** eine Schutzkappe (50) die Sicherung bedeckt.

17. Abgedichteter Akkumulator nach einem der Ansprüche 1 bis 16, **dadurch gekennzeichnet, dass** das Verbindungsstück geeignet ist, einen elektrischen Strom zwischen der negativen Elektrode und der negativen Stromausgangsklemme zu leiten.

18. Abgedichteter Akkumulator nach einem der Ansprüche 1 bis 16, **dadurch gekennzeichnet, dass** das Verbindungsstück geeignet ist, einen elektrischen Strom zwischen der positiven Elektrode und der positiven Stromausgangsklemme zu leiten.

19. Abgedichteter Akkumulator nach einem der Ansprüche 1 bis 18 von zylindrischer Form.

20. Abgedichteter Akkumulator nach einem der Ansprüche 1 bis 18 von prismatischer Form.

21. Abgedichteter Akkumulator nach einem der Ansprüche 1 bis 20, **dadurch gekennzeichnet, dass** die Membran (20) geeignet ist, sich zu verformen, wenn der Druck im Inneren des Behälters (2) größer als 3 bar ist.

22. Abgedichteter Akkumulator nach einem der Ansprüche 1 bis 21, **dadurch gekennzeichnet, dass** das Verbindungsstück (10) geeignet ist, unter der Wirkung des Schubs der Membran zu brechen, wenn der Druck im Inneren des Behälters (2) zwischen 5 bar und 9 bar beträgt.

23. Abgedichteter Akkumulator nach einem der Ansprüche 1 bis 22, **dadurch gekennzeichnet, dass** er nach dem Brechen des Verbindungsstücks (10), wenn der Druck im Inneren des Behälters (2) zwischen 5 bar und 9 bar beträgt, dicht bleibt.

24. Abgedichteter Akkumulator nach einem der Ansprüche 1 bis 23, der einen Sicherheitsverschluss aufweist, der unter der Wirkung eines Überdrucks in dem Behälter zwischen 12 und 16 bar zerreißt.

## Claims

1. Sealed secondary cell (1) comprising:
- an electrode plate group (9) comprising at least one positive electrode and one negative electrode arranged in a container (2) ;
- positive (6) and negative (7) current output terminals arranged on a cover (5) of the container and respectively connected to the positive and negative electrodes;
- a circuit-breaker comprising:
- a connecting piece (10) extending over the top of the cover of the container and suitable for conducting an electrical current of between 30 A and 100 A between an electrode of one polarity and its current output terminal; the connecting piece (10) extending between an intermediate terminal (7') connected to an electrode of the electrode plate group and the current output terminal (7); and
- a membrane (20), electrically insulated from the connecting piece and suitable for deforming under the effect of an overpressure in the container, the deformation of the membrane being suitable for breaking the connecting piece.

2. Sealed secondary cell according to claim 1, **characterized in that** the connecting piece (10) has at least one weakened point (11).

3. Sealed secondary cell according to claim 2, **characterized in that** the weakened point (11) of the connecting piece (10) is situated close to its point of connection with the current output terminal (7).

4. Sealed secondary cell according to any one of claims 1 to 3, **characterized in that** the connecting piece (10) has a section for passage of the current, between 2 mm² and 3mm², width by thickness.

5. Sealed secondary cell according to any one of claims 1 to 4, **characterized in that** the connecting piece (10) has two weakened points (11, 11'), a first weakened point (11) being shaped to ensure the rupture of the connecting piece and a second weakened point (11') being shaped to ensure a tilting of the broken connecting piece.

6. Sealed secondary cell according to claim 5, **characterized in that** the first weakened point (11) of the connecting piece (10) comprises two symmetrical V-shaped weakened areas (101, 102) situated respectively on each face of the connecting piece.

7. Sealed secondary cell according to claim 5 or claim 6, **characterized in that** the first weakened point of the connecting piece (10) comprises two lugs (103, 104) framing an opening (105) made in the piece (10), with two weakened areas (106, 107) extending respectively over each lug in two more or less perpendicular directions.

8. Sealed secondary cell according to any one of claims 1 to 7, **characterized in that** the connecting piece (10) is of aluminium.

9. Sealed secondary cell according to any one of claims 1 to 8, **characterized in that** the membrane (20) is of aluminium.

10. Sealed secondary cell according to any one of claims 1 to 9, **characterized in that** the membrane (20) has a thickness of between 100 and 150 µm.

11. Sealed secondary cell according to any one of claims 1 to 10, **characterized in that** the membrane (20) has a convex shape towards the inside of the container before the circuit-breaker has operated.

12. Sealed secondary cell according to claim 11, **characterized in that** the membrane (20) has a central concave deformation.

13. Sealed secondary cell according to any one of claims 1 to 12, **characterized in that** the membrane (20) is suitable for deforming with an amplitude greater than or equal to 1.5 mm.

14. Sealed secondary cell according to any one of claims 1 to 13, **characterized in that** an insulating layer (4) is provided between the membrane (20) and the connecting piece (10), the insulating layer remaining whole when the connecting piece is broken by deformation of the membrane.

15. Sealed secondary cell according to any one of claims 1 to 14, **characterized in that** the membrane (20) is situated in the thickness of the cover (5).

16. Sealed secondary cell according to any one of claims 1 to 15, **characterized in that** a protective cap (50) covers the circuit-breaker.

17. Sealed secondary cell according to any one of claims 1 to 16, **characterized in that** the connecting piece is suitable for conducting an electric current between the negative electrode and the negative current output terminal.

18. Sealed secondary cell according to any one of claims 1 to 16 **characterized in that** the connecting piece is suitable for conducting an electric current between the positive electrode and the positive current output terminal.

19. Sealed secondary cell according to any one of claims 1 to 18 of cylindrical format.

20. Sealed secondary cell according to any one of claims 1 to 18 of prismatic format.

21. Sealed secondary cell according to any one of claims 1 to 20 **characterized in that** the membrane (20) is suitable for deforming when the pressure in the container (2) exceeds 3 bar.

22. Sealed secondary cell according to any one of claims 1 to 21 **characterized in that** the connecting piece (10) is designed to break under the thrust force of the membrane when the pressure inside the container (2) is between 5 and 9 bar.

23. Sealed secondary cell according to to any one of claims 1 to 22 **characterized in that** it remains tight after the connecting piece (10) has ruptured, when the pressure inside the container (2) is between 5 and 9 bar.

24. Sealed secondary cell according to any one of claims 1 to 23 including a safety cap which tears under the effect of an overpressure in the container of between 12 and 16 bar.
